# EUROPÄISCHE PATENTANMELDUNG

(11) **EP 4 550 627 A1**
(43) Veröffentlichungstag der Anmeldung: **07.05.2025**
(21) Anmeldenummer: 23207998.8
(22) Anmeldetag: 06.11.2023
(51) Int. Cl.: H02K 1/02, H02K 1/276, H02K 7/14, H02K 21/16

(54) **MAGNETSEGMENTE FÜR EINEN ROTOR**

(71) Anmelder: Hilti Aktiengesellschaft, 9494 Schaan (LI)
(72) Erfinder: Asmus, Torsten, 87600 Kaufbeuren (DE)
(74) Vertreter: Hilti Aktiengesellschaft Corporate Intellectual Property

(57) **Zusammenfassung**

Rotor für einen Elektromotor, insbesondere als Antrieb für eine Werkzeugmaschine, wobei der der Rotor einen Rotorkörper enthält mit wenigstens einem ersten und zweiten um eine Rotationsachse angeordneten Permanentmagnet, wobei jeder Permanentmagnet wenigstens ein erstes, zweites und drittes in einer Reihe angeordnetes Magnetsegment enthält, und wobei das Material des ersten und dritten Magnetsegments eine um mindestens 7% höhere Koerzitivfeldstärke aufweist als das Material des zweiten Magnetsegments.

## Beschreibung

Die vorliegende Erfindung betrifft ein Rotor für einen Elektromotor, insbesondere als Antrieb für eine Werkzeugmaschine.

Des Weiteren betrifft die vorliegende Erfindung einen Elektromotor mit einem Rotor.

Darüber hinaus betrifft die vorliegende Erfindung eine Werkzeugmaschine mit einem Rotor.

Aus dem Stand der Technik sind Elektromotoren (insbesondere als Antrieb für Werkzeugmaschinen) bekannt, die zum Erzeugen eines Drehmoments im Wesentlichen einen Stator und einen relativ zu dem Stator drehbaren Rotor enthalten.

Rotoren als Komponenten bzw. Bauteile von Elektromotoren für Elektrowerkzeuge weisen zur Bildung von Magnetpolen üblicherweise Permanentmagnete auf, deren Form als einzelner Block, Doppel- oder Mehrfachblock in V- oder U-Anordnung, als Ring oder Ring- bzw. Schalensegment ausgebildet sein kann.

Das Magnetfeld der Permanentmagnete interagiert mit dem Magnetfeld des Stators, welches durch mindestens einen Elektromagneten gebildet wird derart, dass ein Drehmoment in einer gewünschten Drehrichtung oder entgegengesetzt einer bestehenden Drehrichtung entsteht. Bedingt durch die Zahnabschnitte des Stators, welche bei Drehung des Rotors zyklische Änderungen der magnetischen Widerstände im magnetischen Kreis hervorrufen sowie zyklische Magnetfelder des Stators, welche mit dem Magnetfeld des Rotors in Wechselwirkung treten, sind die resultierenden magnetischen Feldvektoren im Permanentmagneten sowohl in Richtung als auch Betrag örtlich nicht konstant. Als Folge daraus treten Wirbelströme im Permanentmagneten auf, die neben Wirkungsgradverlusten eine zusätzliche Erwärmung im Rotor erzeugen. Die Erwärmung im Rotor kann zu hohen Betriebstemperaturen der Permanentmagnete führen, wodurch zumindest eine partielle irreversible Entmagnetisierung der Permanentmagnete hervorgerufen wird.

Es ist damit Aufgabe der vorliegenden Erfindung das vorstehend beschriebene Problem zu lösen.

Die Aufgabe wird gelöst durch den Gegenstand des unabhängigen Patentanspruchs 1, 10 und 11.

Weitere vorteilhafte Ausführungsformen des erfindungsgemäßen Gegenstands sind in den entsprechenden abhängigen Patentansprüchen enthalten.

Die Aufgabe wird dabei insbesondere gelöst durch einen Rotor für einen Elektromotor, insbesondere als Antrieb für eine Werkzeugmaschine.

Erfindungsgemäß ist vorgesehen, dass der Rotor einen Rotorkörper enthält, wobei der Rotorkörper wenigstens einen ersten und zweiten um eine Rotationsachse angeordneten Permanentmagnet enthält, wobei jeder Permanentmagnet wenigstens ein erstes, zweites und drittes in einer Reihe angeordnetes Magnetsegment enthält, und wobei das Material des ersten und dritten Magnetsegments eine um mindestens 7% höhere Koerzitivfeldstärke (H_{CJ}) aufweist als das Material des zweiten Magnetsegments.

Das erste und dritte Magnetsegment kann auch als außenliegendes Magnetsegment bezeichnet werden.

Die Koerzitivfeldstärke kann auch als mittlere Koerzitivfeldstärke bezeichnet werden.

Entsprechend einer alternativen Ausführungsform kann es möglich sein, dass das Material des zweiten Magnetsegments eine um mindestens 5% höhere Remanenzflussdichte (Bᵣ) aufweist als das Material des ersten oder dritten Magnetsegments.

Das zweite Magnetsegment kann auch als mittleres Magnetsegments bezeichnet werden.

Gemäß einer alternativen Ausführungsform kann es möglich sein, dass das Material des ersten und dritten Magnetsegments eine um mindestens 7 bis 15% höhere Koerzitivfeldstärke (H_{CJ}) aufweist als das Material des zweiten Magnetsegments.

Entsprechend einer alternativen Ausführungsform kann es möglich sein, dass das Material des zweiten Magnetsegments eine um mindestens 5 bis 10% höhere Remanenzflussdichte (Bᵣ) aufweist als das Material des ersten oder dritten Magnetsegments.

Gemäß einer alternativen Ausführungsform kann es möglich sein, dass das Volumen eines ersten und dritten Magnetsegments zwischen 10% und 35% des aufsummierten Volumens aller Magnetsegmente des wenigstens ersten oder zweiten Permanentmagneten aufweist.

Entsprechend einer alternativen Ausführungsform kann es möglich sein, dass die Magnetsegmente voneinander elektrisch isoliert sind.

Gemäß einer alternativen Ausführungsform kann es möglich sein, dass benachbarte Magnetsegmente miteinander verklebt sind.

Entsprechend einer alternativen Ausführungsform kann es möglich sein, dass das Material des ersten und dritten Magnetsegments ab einem Abstand von 1 mm von wenigstens einer Magnetsegmentoberfläche eine um mindestens 7% höhere Koerzitivfeldstärke (H_{CJ}) aufweist als das Material des zweiten Magnetsegments.

Gemäß einer alternativen Ausführungsform kann es möglich sein, dass die Magnetsegmente eines polbildenden Permanentmagnets im Wesentlichen V- oder U-förmig angeordnet sind.

Des Weiteren wird die Aufgabe gelöst durch einen Elektromotor mit einem Rotor.

Darüber hinaus wird die Aufgabe gelöst durch eine Werkzeugmaschine mit einem Rotor.

Weitere Vorteile ergeben sich aus der folgenden Figurenbeschreibung. In den Figuren sind verschiedene Ausführungsbeispiele der vorliegenden Erfindung dargestellt.

Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine schematische Seitenansicht auf eine erfindungsgemäße Werkzeugmaschine gemäß einer beispielhaften Ausführungsform mit einem Elektromotor;
- Figur 2: eine Vorderansicht auf einen Stator und einen Rotor;
- Figur 3: eine perspektivische Ansicht auf den Rotor gemäß einer ersten Ausführungsform;
- Figur 4: eine Vorderansicht auf den Rotor gemäß der ersten Ausführungsform;
- Figur 5: eine Vorderansicht auf den Rotor gemäß einer zweiten Ausführungsform;
- Figur 6: eine Vorderansicht auf den Rotor gemäß einer dritten Ausführungsform;
- Figur 7: eine Vorderansicht auf den Rotor gemäß einer vierten Ausführungsform; und
- Figur 8: eine Vorderansicht auf den Rotor gemäß einer fünften Ausführungsform.

### Ausführungsbeispiele:

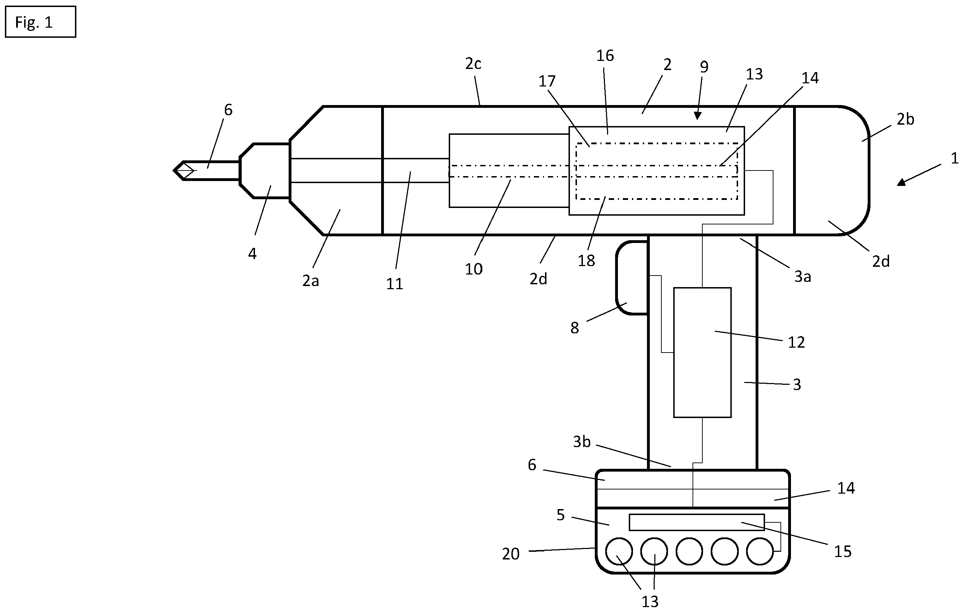

Figur 1 zeigt eine Werkzeugmaschine 1 gemäß einer beispielhaften Ausführungsform. Die Werkzeugmaschine 1 ist in Form einer akkubetriebenen Bohrmaschine ausgestaltet.

Gemäß einem alternativen Ausführungsbeispiel kann die Werkzeugmaschine auch in Form einer Säge, eines Schleifgeräts, eines Bohrhammers oder dergleichen ausgestaltet sein.

Die als Bohrmaschine ausgestaltete Werkzeugmaschine 1 enthält dabei im Wesentlichen ein Gehäuse 2, einen Handgriff 3, eine Werkzeugaufnahme 4 und eine Energieversorgung 5.

Das Gehäuse 2 weist ein vorderes Ende 2a, ein hinteres Ende 2b, ein oberes Ende 2c und ein unteres Ende 2d auf.

An dem vorderen Ende 2a des Gehäuses 2 ist die Werkzeugaufnahme 4 positioniert. Die Werkzeugaufnahme 4 dient zum Aufnehmen und Halten eines Werkzeugs. In den Figuren ist das Werkzeug nicht dargestellt.

In dem vorliegenden Ausführungsbeispiel kann das Werkzeug in Form eines Bohrers ausgestaltet. An dem unteren Ende 2d des Gehäuses 2 ist ein erstes Ende 3a des Handgriffs 3 positioniert. An dem zweiten Ende 3b des Handgriffs 3 ist eine Schnittstelle 6 vorgesehen.

Wie in Figur 1 gezeigt weist der Handgriff 3 einen Aktivierungsschalter 8 auf, mit dem die Werkzeugmaschine 1 in einen Aktivierungszustand oder Deaktivierungszustand eingestellt werden kann.

An die Schnittstelle 6 kann die Energieversorgung 5 wiederlösbar befestigt werden. In dem vorliegenden Ausführungsbeispiel ist die Energieversorgung 5 in Form eines Akkumulators ausgestaltete. Die Energieversorgung 5 dient zum Versorgen der Werkzeugmaschine mit elektrischer Energie.

Entsprechend einem alternativen Ausführungsbeispiel kann die Energieversorgung 5 auch als Stromkabel zum Verbinden der Werkzeugmaschine 1 mit einer Netzstromquelle (Steckdose) ausgestaltet sein. Die als Stromkabel ausgestaltete Energieversorgung 5 ist in den Figuren nicht dargestellt.

Im Inneren des Gehäuses 2 ist im Wesentlichen ein Elektromotor 9 als Antrieb, eine Getriebevorrichtung 10, eine Antriebswelle 11 und eine Steuereinrichtung 12 positioniert.

Der Elektromotor 9, die Getriebevorrichtung 10, die Antriebswelle 11 und die Werkzeugaufnahme 4 sind so im Inneren des Gehäuses 2 zueinander angeordnet, dass ein in dem Elektromotor 9 erzeugtes Drehmoment auf die Getriebevorrichtung 10, die Antriebswelle 11 und schließlich auf die Werkzeugaufnahme 4 bzw. auf das Werkzeug übertragen werden kann.

Die Steuereinrichtung 12 ist mittels entsprechenden Leitungen L mit dem Aktivierungsschalter 8, der Akku-Schnittstelle 6 und dem Elektromotor 9 verbunden.

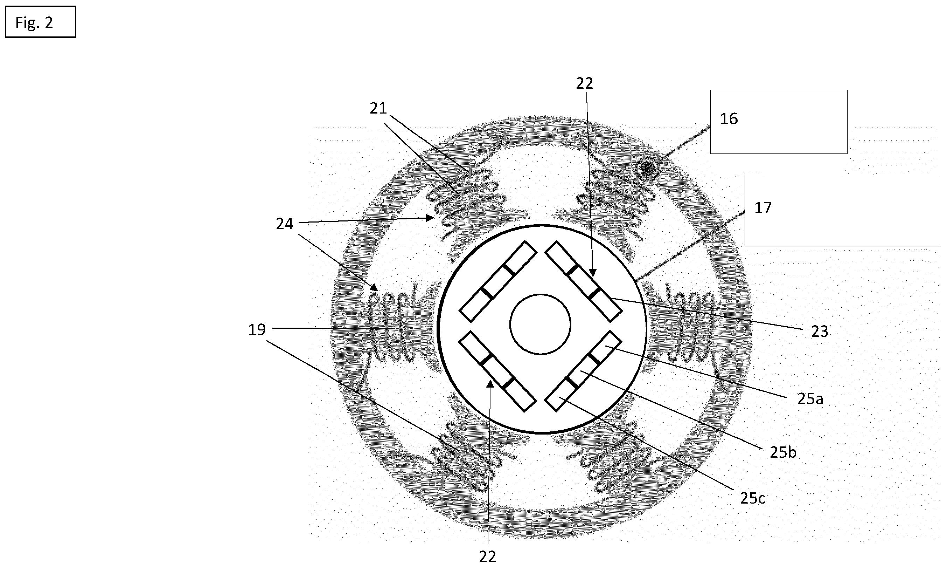

Der Elektromotor 9 ist in Form eines bürstenlosen Elektromotors ausgestaltet und enthält im Wesentlichen einen Stator 16 und einen Rotor 17, vgl. Figur 2.

Die als Akkumulator ausgestaltete Energieversorgung 5 kann mit der Werkzeugmaschine 1 wiederlösbar verbunden werden, um die Werkzeugmaschine 1 mit elektrischer Energie zu versorgen. Der Akkumulator 5 enthält im Wesentlichen ein Akku-Gehäuse 20, eine Anzahl an Energiespeicherzellen 13, eine Akku-Schnittstelle 14 sowie eine Steuerungseinrichtung 15.

Die Energiespeicherzellen 13 können auch als Akku-Zellen bezeichnet werden und sind im Inneren des Akku-Gehäuses 20 angeordnet.

Das Akku-Gehäuse 20 enthält dabei im Wesentlichen ein Deckelelement 20a, vier Seitenwände 20b und ein Bodenelement 20c.

Die Akku-Schnittstelle 14 ist an der Außenseite des Deckelelements 20a angeordnet und dient zum elektrischen bzw. elektronischen sowie mechanischen Verbinden des Akkumulators 5 mit der Werkzeugmaschine 1 oder einer Ladevorrichtung.

Die Ladevorrichtung dient zum Laden des Akkumulators 5 mit elektrischer Energie und ist in den Figuren nicht dargestellt.

Zum elektrischen bzw. elektronischen Verbinden weist die Akku-Schnittstelle 14 einen Pluskontakt, einen Minuskontakt und einen Kommunikationskontakt auf. Der Plus- und Minuskontakt dient zur Erzeugen eines Stromkreises, wenn der Akkumulator 5 mit einer Werkzeugmaschine 1 oder einer Ladevorrichtung verbunden ist. Der Kommunikationskontakt dient zum Senden und Empfangen von Daten sowie Informationen in Form von elektrischen Signalen.

Alternativ oder zusätzlich kann der Akkumulator 5 auch eine Funkkommunikation (z.B. Bluetooth) bzw. drahtlose Kommunikation enthalten.

Die Energiespeicherzellen 13 dienen zum Aufnehmen, Speichern und erneuten Abgeben elektrischer Energie. Die Energiespeicherzellen 13 sind in zylindrischer Form sowie auf Basis einer Lithium-lonen-Technologie ausgestaltet. Jede Energiespeicherzelle 13 enthält an einem Ende eine Kontakteinrichtung, die zur Übertragung elektrischer Energie dient. Die einzelnen Kontakteinrichtung sind über entsprechende Leitungen mit der Steuerungseinrichtung 15 des Akkumulators 5 verbunden.

Alternativ können die Energiespeicherzellen 13 auch auf einer anderen geeigneten Technologie basieren.

Die zylindrische Form der Energiespeicherzellen 13 ist ebenfalls optional, sodass auch jede andere geeignete Form bzw. Geometrie gewählt werden kann. So ist es insbesondere auch möglich, dass die Energiespeicherzellen 13 als Pouchzellen ausgestaltet sind.

Es ist zudem auch möglich, dass der Akkumulator 5 sowohl zylindrische Energiespeicherzellen 13 als auch Pouch-Zellen enthält. Es ist insbesondere möglich, dass der Akkumulator 5 lediglich eine einzige zylindrische Energiespeicherzelle 13 und eine einzige Pouchzelle enthält.

Die Steuerungseinrichtung 15 regelt und steuert verschiedene Funktionen des Akkumulators 5. Zu den Funktion gehört unter anderen die Steuerung der Aufnahme und Abgabe von elektrischer Energie in bzw. aus den Energiespeicherzellen 13. Darüber hinaus wird mit Hilfe der Steuerungseinrichtung 15 die Menge an elektrischer Energie gesteuert, die von den Energiespeicherzellen 13 aufgenommen oder abgegeben werden sollen.

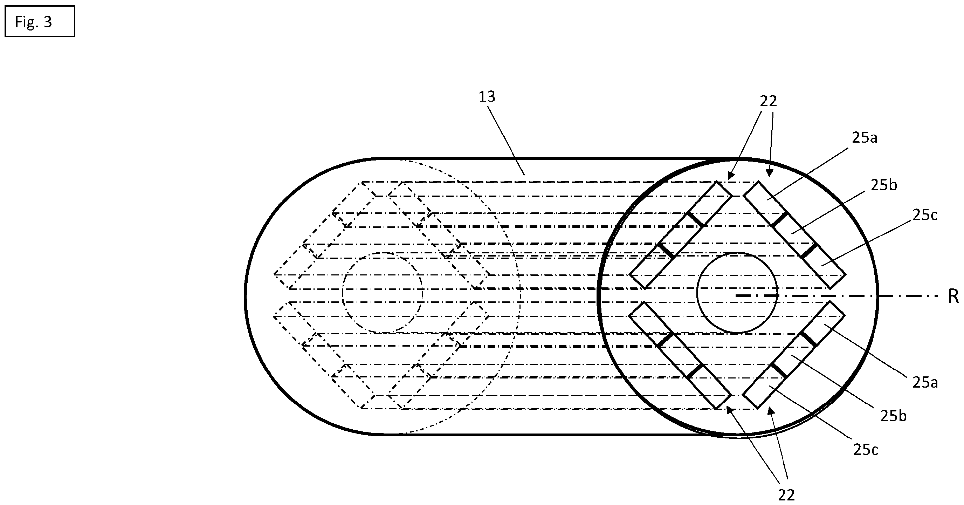

Wie in Figur 3 angedeutet ist der Rotor 17 im Inneren des Stators 16 positioniert und zudem drehbar zu dem Stator 16 ausgestaltet.

Wie in Figur 2 gezeigt enthält der Stator 16 ein Statorblechpaket mit sechs radial nach innen gerichtete Polzähne 19. Das Statorblechpaket besteht im Wesentlichen aus einer Anzahl an übereinander gestapelten Profilblechen.

Es sind jeweils zwei Polzähne 19 einander gegenüber positioniert. Gemäß einer alternativen Ausführungsform können auch mehr oder weniger als sechs Polzähne 19 vorgesehen sein. Die Polzähne 19 dienen zum jeweiligen Aufnehmen eines Spulendrahts 21 zum Erzeugen einer Spule 24. Die Spulen 24 sind entsprechend über die Steuereinrichtung 12 mit der Energieversorgung 5 verbunden, um eine elektrische Spannung an die Spulen 24 anzulegen. Mit anderen Worten: die Spulen 24 werden bestromt. Mit Hilfe der Spulen 24 wird ein abwechselndes Magnetfeld MF erzeugt, durch welches der Rotor 17 gedreht wird.

Wie in Figur 2 bis 7 gezeigt enthält der Rotor 17 einen zylindrischen Rotorkörper 18 mit einer Anzahl an Permanentmagneten 22.

Der Rotorkörper 18 enthält eine Anzahl an Aussparungen 23, in die jeweils ein Permanentmagnet 22 eingeführt werden kann. Wie in Figur 3 angedeutet, sind die Permanentmagnete 22 hierdurch gleichmäßig um eine Rotationsachse R angeordnet.

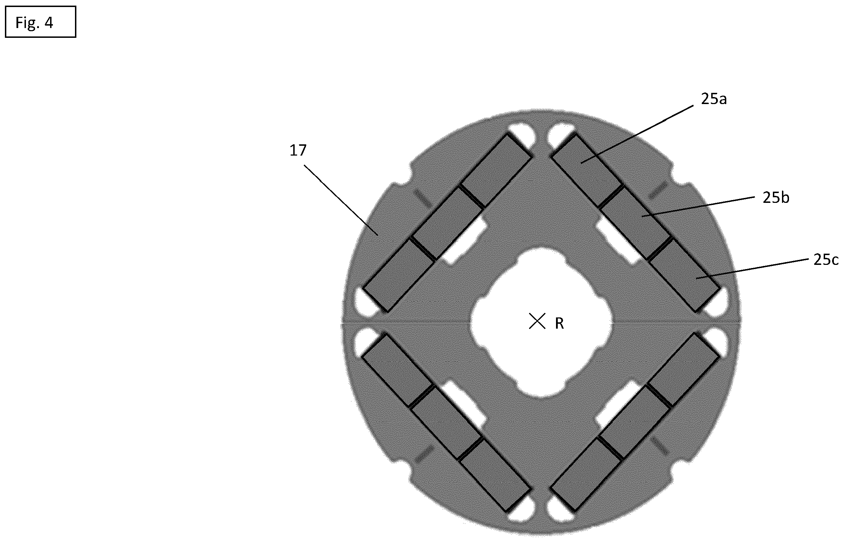

In Figur 3 und 4 ist der Rotor 17 gemäß einer ersten Ausführungsform dargestellt, wobei der Rotorkörper vier Aussparungen 23 aufweist. Es sind dabei jeweils zwei Aussparungen 23 gegenüberliegend und gleichmäßig um die Rotationsachse R positioniert. In jeder Aussparung 23 ist ein erstes, zweites und drittes Magnetsegment 25a, 25b, 25c in einer Reihe angeordnet.

Die Magnetsegmente 25a, 25b, 25c bestehen dabei aus NdFeB (Neodym-Eisen-Bor).

Das Material des ersten Magnetsegments 25a und dritten Magnetsegments 25c weist eine um mindestens 7% höhere Koerzitivfeldstärke (H_{CJ}) auf als das Material des zweiten Magnetsegments 25b. Mit dem zweiten Magnetsegment 25b ist das mittlere Magnetsegment gemeint, welcher zwischen dem ersten Magnetsegment 25a und dritten Magnetsegment 25c bzw. zwischen den beiden außenliegenden Magnetsegmenten 25a, 25c positioniert ist.

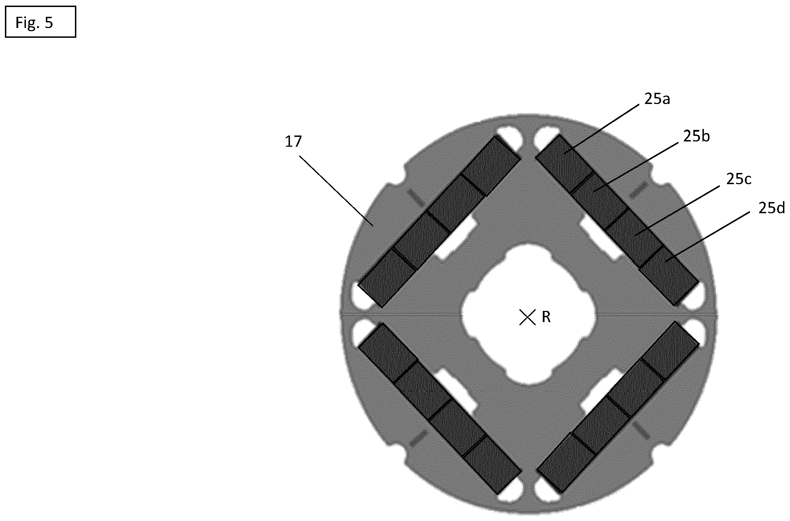

In Figur 5 ist der Rotor 17 gemäß einer zweiten Ausführungsform dargestellt. Der Rotor 17 gemäß der zweiten Ausführungsform ist im Wesentlichen identisch zu dem Rotor 17 gemäß der ersten Ausführungsform. Im Unterschied zu der ersten Ausführungsform ist bei der zweiten Ausführungsform in jeder Aussparung ein erstes, zweites, drittes und viertes Magnetsegment 25a, 25b, 25c, 25d in einer Reihe angeordnet. Das Material des ersten Magnetsegments 25a und vierten Magnetsegments 25d weist eine um mindestens 7% höhere Koerzitivfeldstärke (H_{CJ}) auf als das Material des zweiten Magnetsegments 25b und dritten Magnetsegments 25c.

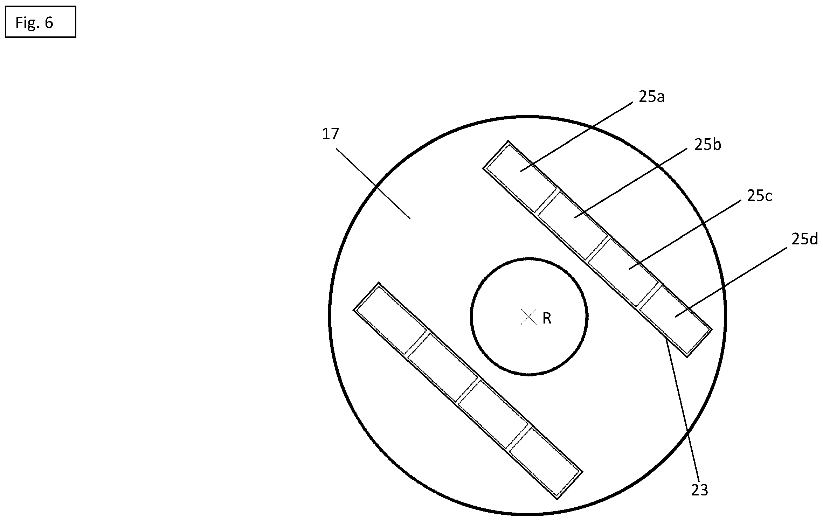

In Figur 6 ist der Rotor 17 gemäß einer dritten Ausführungsform dargestellt. Der Rotor 17 gemäß der dritten Ausführungsform ist im Wesentlichen identisch zu dem Rotor 17 gemäß der zweiten Ausführungsform. Im Unterschied zu der zweiten Ausführungsform sind bei der dritten Ausführungsform anstelle von vier Aussparungen 23 lediglich zwei Aussparungen 23 vorgesehen. Wie in Figur 6 ersichtlich sind die beiden Aussparungen 23 identisch und um die Rotationsachse R herum angeordnet. In jeder der beiden Aussparung 23 ist ein erstes, zweites, drittes und viertes Magnetsegment 25a, 25b, 25c, 25d in einer Reihe positioniert.

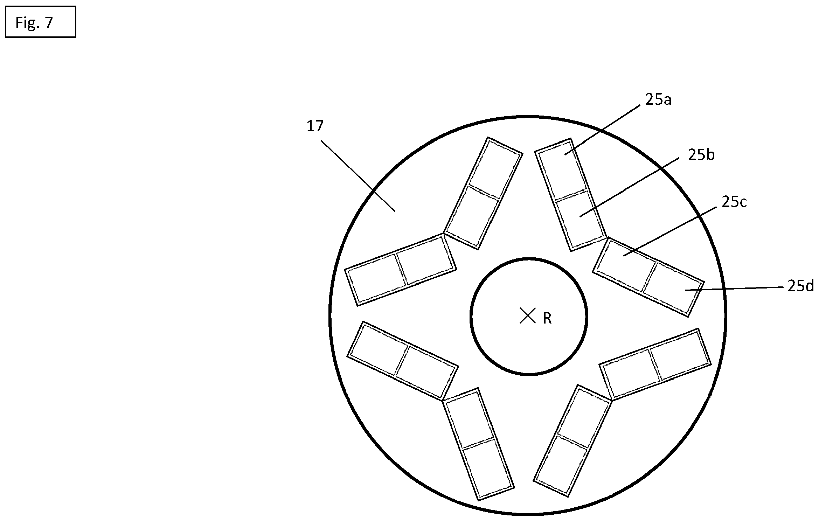

In Figur 7 ist der Rotor 17 gemäß einer vierten Ausführungsform dargestellt. Der Rotor 17 gemäß der vierten Ausführungsform unterscheidet sich von dem Rotor 17 gemäß der dritten Ausführungsform dadurch, dass jede Aussparung 23 im Wesentlichen V-förmig ausgestaltet ist. Die V-förmige Ausgestaltung einer Aussparung 23 enthält dabei jeweils einen ersten und zweiten Schenkel 23a, 23b welche in einem stumpfen Winkel zueinander positioniert sind. Die Öffnung jeder Aussparung 23 weist dabei in einer radialen Richtung nach außen. Der erste und zweite Schenkel 23a, 23b ist dabei so ausgestaltet, dass jeweils zwei Magnetsegmente 25a, 25b nebeneinander aufgenommen werden können. Gemäß einer weiteren alternativen Ausführungsform kann jeder Schenkel 23a, 23b auch so ausgestaltete sein, dass mehr als zwei Magnetsegmente 25a, 25b aufgenommen werden können.

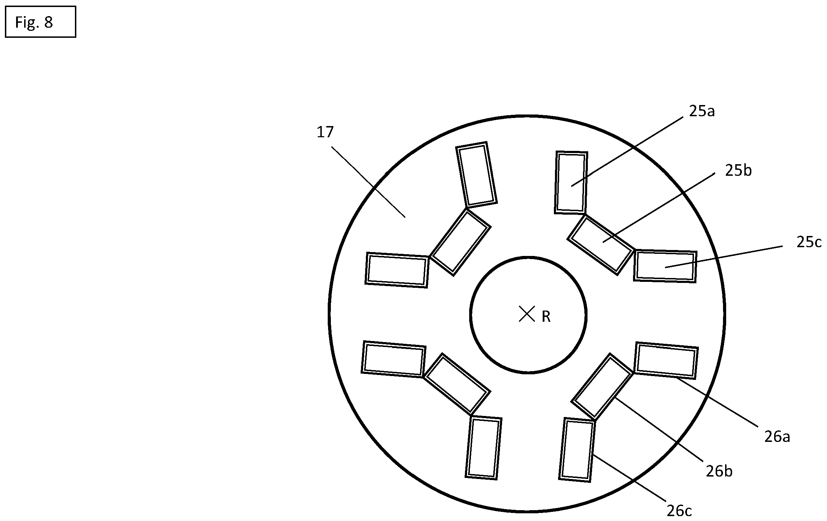

In Figur 8 ist der Rotor 17 gemäß einer fünften Ausführungsform dargestellt. Der Rotor 17 gemäß der fünften Ausführungsform unterscheidet sich von dem Rotor 17 gemäß der vierten Ausführungsform dadurch, dass jede Aussparung 23 im Wesentlichen U-förmig ausgestaltet ist.

Die U-förmige Ausgestaltung einer Aussparung 23 enthält dabei jeweils einen ersten, zweiten und dritten Abschnitt 26a, 26b, 26c. Die Öffnung 27a, 27b jeder Aussparung 23 weist dabei in einer radialen Richtung nach außen. Jeder der drei Abschnitte 26a, 26b, 26c ist dabei so ausgestaltet, dass jeweils ein Magnetsegment 25a. 25b, 25c aufgenommen werden kann. Entsprechend einer weiteren alternativen Ausführungsform kann jeder Abschnitt auch mehr als ein Magnetsegment aufnehmen.

Gemäß einer alternativen Ausführungsform kann das Material des ersten Magnetsegments 25a und dritten Magnetsegments 25c bzw. der jeweils außenliegenden Magnetsegments 25a, 25c ab einem Abstand von 1 mm von einer Magnetsegmentoberfläche eine um mindestens 7% höhere Koerzitivfeldstärke aufweisen als das Material des zweiten Magnetsegments 25b bzw. mittleren Magnetsegments 25b.

Die Entmagnetisierung der Magnetsegmente kann durch Korngrenzen-Diffusionsprozess, der sogenannte GBD-Prozess, erreicht werden.

### Bezugszeichen

- 1: Werkzeugmaschine
- 2: Gehäuse
- 2a: vorderes Ende des Gehäuses
- 2b: hinteres Ende des Gehäuses
- 2c: oberes Ende des Gehäuses
- 2d: unteres Ende des Gehäuses
- 3: Handgriff
- 3a: erstes Ende des Handgriffs
- 3b: zweites Ende des Handgriffs
- 4: Werkzeugaufnahme
- 5: Energieversorgung
- 6: Schnittstelle
- 8: Aktivierungsschalter
- 9: Elektromotor
- 10: Getriebevorrichtung
- 11: Antriebswelle
- 12: Steuereinrichtung
- 13: Energiespeicherzelle
- 14: Akku-Schnittstelle
- 15: Steuerungseinrichtung
- 16: Stator
- 17: Rotor
- 18: Rotorkörper
- 19: Polzahn
- 20: Akku-Gehäuse
- 21: Spulendraht
- 22: Permanentmagnet
- 23: Aussparung
- 24: Spule
- 25a: erstes Magnetsegment
- 25b: zweites Magnetsegment
- 25c: drittes Magnetsegment
- 25d: viertes Magnetsegment
- 26a: erster Abschnitt einer Aussparung
- 26b: zweiter Abschnitt einer Aussparung
- 26c: dritter Abschnitt einer Aussparung

- R: Rotationsachse

## Patentansprüche

1. Rotor (17) für einen Elektromotor (9), insbesondere als Antrieb für eine Werkzeugmaschine (1),
**gekennzeichnet durch** einen Rotorkörper (18) mit wenigstens einem ersten und zweiten um eine Rotationsachse (R) angeordneten Permanentmagnet (22), wobei jeder Permanentmagnet (22) wenigstens ein erstes, zweites und drittes in einer Reihe angeordnetes Magnetsegment (25a, 25b, 25c) enthält, und wobei das Material des ersten und dritten Magnetsegments (25a, 25c) eine um mindestens 7% höhere Koerzitivfeldstärke (H_{CJ}) aufweist als das Material des zweiten Magnetsegments (25b).

2. Rotor (17) nach Anspruch 1,
**dadurch gekennzeichnet, dass** das Material des zweiten Magnetsegments (25b) eine um mindestens 5% höhere Remanenzflussdichte aufweist als das Material des ersten oder dritten Magnetsegments (25a, 25c).

3. Rotor (17) nach Anspruch 1 oder 2,
**dadurch gekennzeichnet, dass** das Material des ersten und dritten Magnetsegments (25a, 25c) eine um mindestens 7 bis 15% höhere Koerzitivfeldstärke aufweist als das Material des zweiten Magnetsegments.

4. Rotor (17) nach wenigstens einem der Ansprüche 1 bis 3,
**dadurch gekennzeichnet, dass** das Material des zweiten Magnetsegments (25b) eine um mindestens 5 bis 10% höhere Remanenzflussdichte aufweist als das Material des ersten oder dritten Magnetsegments (25a, 25c).

5. Rotor (17) nach wenigstens einem der Ansprüche 1 bis 4,
**dadurch gekennzeichnet, dass** das Volumen eines ersten und dritten Magnetsegments (25a, 25c) zwischen 10% und 35% des aufsummierten Volumens aller Magnetsegmente (25a, 25b, 25c) des wenigstens ersten oder zweiten Permanentmagneten (22) aufweist.

6. Rotor (17) nach wenigstens einem der Ansprüche 1 bis 5,
**dadurch gekennzeichnet, dass** die Magnetsegmente (25a, 25b, 25c, 25d) voneinander elektrisch isoliert sind.

7. Rotor (17) nach wenigstens einem der Ansprüche 1 bis 6,
**dadurch gekennzeichnet, dass** benachbarte Magnetsegmente (22) miteinander verklebt sind.

8. Rotor (17) nach wenigstens einem der Ansprüche 1 bis 7,
**dadurch gekennzeichnet, dass** das Material des ersten und dritten Magnetsegments (25a, 25c) ab einem Abstand von 1 mm von wenigstens einer Magnetsegmentoberfläche eine um mindestens 7% höhere Koerzitivfeldstärke aufweist als das Material des zweiten Magnetsegments (25b).

9. Rotor (17) nach wenigstens einem der Ansprüche 1 bis 8,
**dadurch gekennzeichnet, dass** die Magnetsegmente (25a, 25b, 25c, 25d) eines polbildenden Permanentmagnets (22) im Wesentlichen V- oder U-förmig angeordnet sind.

10. Elektromotor mit einem Rotor (17) nach wenigstens einem der Ansprüche 1 bis 9.

11. Werkzeugmaschine mit einem Rotor (17) nach wenigstens einem der Ansprüche 1 bis 9.
